# EUROPÄISCHE PATENTSCHRIFT

(11) **EP 1 458 998 B1**
(45) Veröffentlichungstag und Bekanntmachung des Hinweises auf die Patenterteilung: **17.05.2006**
(21) Anmeldenummer: 02804881.7
(22) Anmeldetag: 06.12.2002
(51) Int. Cl.: F16K 31/02

(54) **MEHRWEGEVENTIL**
MULTIWAY VALVE
SOUPAPE A VOIES MULTIPLES

(30) Priorität: 19.12.2001 DE 10162504
(43) Veröffentlichungstag der Anmeldung: 22.09.2004
(73) Patentinhaber: BSH Bosch und Siemens Hausgeräte GmbH, 81739 München (DE)
(72) Erfinder: WENNING, Udo, 89537 Giengen/Brenz (DE); NEUMANN, Michael, 89073 Ulm (DE); EBERHARDT, Hans-Frieder, 89537 Giengen-Burgberg (DE); KORDON, Rolf, 89537 Giengen (DE)
(86) Internationale Anmeldenummer: PCT/EP2002/013879
(87) Internationale Veröffentlichungsnummer: WO 2003/052305

(56) Entgegenhaltungen:
- DE-A- 3 813 727
- DE-B- 1 041 314
- DE-C- 19 833 744
- US-A- 4 114 645
- US-A- 4 475 686
- US-A- 5 189 991

## Beschreibung

Die vorliegende Erfindung betrifft ein Mehrwegeventil sowie einen Fluidkreislauf bzw. ein Kältegerät, in denen ein solches Mehrwegeventil einsetzbar ist.

Mehrwegeventile werden in Kältegeräten mit mehr als einem Kühlraum und voneinander unabhängigen Temperaturregelungen der mehreren Kühlräume eingesetzt, um einen Kältemittelstrom selektiv jeweils dem Verdampfer desjenigen Kühlraums zuzuführen, wo es benötigt wird. Herkömmlicherweise sind derartige Mehrwegeventile als Magnetventile ausgeführt, bei denen ein Schließorgan aus einem ferromagnetischen Material durch Einwirkung des magnetischen Feldes eines Elektromagneten zwischen zwei verschiedenen Ruhepositionen umgeschaltet wird, in denen es jeweils einen von zwei möglichen Wegen des Kältemittels durch das Ventil blockiert. Um eine gute Dichtigkeit des Magnetventils in seinen verschiedenen Schaltstellungen zu erzielen, muss das Schließorgan in Ruhe mit einer nicht zu geringen Kraft gegen seinen Sitz gedrückt werden; diese Kraft muss beim Umschalten des Ventils überwunden werden, um das Schließorgan in eine neue Stellung zu bringen. Je stärker diese Schließkraft ist, um so größer, kräftiger und dementsprechend teurer ist der hierfür benötigte Elektromagnet.

In der US 4,114,645 ist ein Mehrwegventil offenbart, dessen Schließorgan mittels einer sich aufgrund einer Heizeinrichtung erwärmten und dadurch sich ausdehnenden Flüssigkeit verstellt wird.

Eine Aufgabe der vorliegenden Erfindung ist, ein Mehrwegeventil anzugeben, bei dem das Schließorgan ohne den Einsatz einer Magnetkraft umschaltbar ist; eine weitere Aufgabe ist, ein Mehrwegeventil anzugeben, das preiswert in großen Mengen gefertigt werden kann.

Die Aufgabe wird gelöst durch ein Mehrwegeventil mit den Merkmalen des Anspruchs 1.

Anstelle von Magnetkraft nutzt dieses Magnetventil die Ausdehnung eines erhitzten Fluids in einer Kammer, um eine Umschaltbewegung des Schließorgans von einer Schaltstellung des Ventils zu einer anderen anzutreiben. Die Zylinderkammer kommuniziert im Laufe der Bewegung des Stempels zeitweilig mit einem der Ein- und Ausgänge des Ventils. Dies erlaubt es, das von dem Mehrwegeventil geschaltete Fluid als Arbeitsfluid in der Zylinderkammer einzusetzen. So ist leicht zu gewährleisten, dass stets genügend Arbeitsfluid zum Antreiben der Zylinderbewegung vorhanden ist. Eine absolute Dichtigkeit der Zylinderkammer über lange Zeiten, d.h. eine Vielzahl von Schaltzyklen, ist für den Betrieb des Ventils nicht erforderlich, was eine preiswerte Herstellung des Ventils erlaubt.

Vorzugsweise ist jeder Sitz des Ventils jeweils einem Ausgang des Ventils zugeordnet, so dass der Druck des durch das Ventil strömenden Fluids ausgenutzt werden kann, um das Schließorgan gegen seinen Sitz zu drücken.

Um ein sicheres Umschalten des Ventils auch in einem Zustand zu ermöglichen, wo dieses nicht vom Fluid durchströmt ist, ist zweckmäßigerweise ein federelastisches Element vorhanden, das auf das Schließorgan eine Gegenkraft ausübt, die der Verdrängung des Schließorgans von jedem Sitz entgegenwirkt. Dieses federelastische Element kann darüber hinaus dafür sorgen, dass wenn das Schließorgan von einem Sitz verdrängt worden ist, es eine neue Schließposition an einem anderen Sitz einnimmt.

Das Schließorgan ist in einer Kammer des Gehäuses bewegbar, die hier als Sitzkammer bezeichnet wird. Die Ventilsitze sind vorzugsweise an einer ersten Wand dieser Sitzkammer angeordnet, und das federelastische Element beaufschlagt das Schließorgan in Richtung der ersten Seitenwand, so dass dieses dort eine Position an einem der Sitze einnimmt. Das hierfür verwendete federelastische Element ist vorzugsweise eine Blattfeder.

Der Zylinder ist vorzugsweise jeweils mit einer Druckausgleichsöffnung versehen, die in ausgefahrenem Zustand des Stempels einen Druckausgleich zwischen der Sitzkammer und einer Zylinderkammer des Zylinders erlaubt. Wenn dieser Druckausgleich stattfindet, endet die Bewegung des Stempels.

Der Zylinder weist vorzugsweise eine federbeaufschlagt verschiebbare Rückwand auf, die es erlaubt, den Stempel eines Zylinders, der von einem anderen Zylinder zu einer Bewegung angetrieben wird, zumindest in einer Anfangsphase dieser Bewegung lediglich entgegen der Federkraft und ohne Komprimierung des in der Zylinderkammer enthaltenen Fluids zu verschieben.

Eine Federkammer an der Außenseite der beweglichen Rückwand, die die Rückwand beaufschlagende Feder aufnimmt, kann mit der Umgebung des Mehrwegeventils, vorzugsweise aber mit der Sitzkammer selbst kommunizieren, um das Volumen der Federkammer nach Bedarf verändern zu können.

Vorzugsweise wird die erfindungsgemäße Ventilkonstruktion bei einem Mehrwegeventil eingesetzt, das zwei Sitze und zwei einander diametral gegenüberliegende Zylinder aufweist; die Erfindung ist jedoch auch auf Ventile mit einer größeren Zahl von Sitzen und Zylindern anwendbar.

Eine Heizeinrichtung zum Erhitzen des Fluids in der Zylinderkammer ist vorzugsweise in der Heizkammer angeordnet, die mit der Zylinderkammer kommuniziert, aber von dieser abgesetzt ist, um die Heizeinrichtung vor den Bewegungen des Zylinders zu schützen.

Das erfindungsgemäße Mehrwegeventil ist brauchbar für gasförmige, flüssige oder teils gasförmige und teils flüssige Fluidströme. Wenn das in das Mehrwegeventil eintretende Fluid eine Flüssigkeit oder ein Gas-Flüssigkeitsgemisch ist, so ist eine Versorgungsschaltung zum Versorgen der elektrischen Heizeinrichtung mit Heizenergie zweckmäßigerweise so leistungsstark ausgebildet, dass sie in der Lage ist, das verwendete Fluid in der Zylinderkammer wenigstens teilweise zu verdampfen.

Weitere Merkmale und Vorteile der Erfindung ergeben sich anhand der Beschreibung von Ausführungsbeispielen unter Bezugnahme auf die beigefügten Figuren. Es zeigen:
- Figs. 1 bis 4: Längsschnitte durch ein Mehrwegeventil gemäß einer ersten Ausgestaltung der Erfindung in vier verschiedenen Phasen von dessen Betrieb; und
- Fig. 5: einen horizontalen Schnitt durch ein Mehrwegeventil gemäß einer zweiten Ausgestaltung der Erfindung.

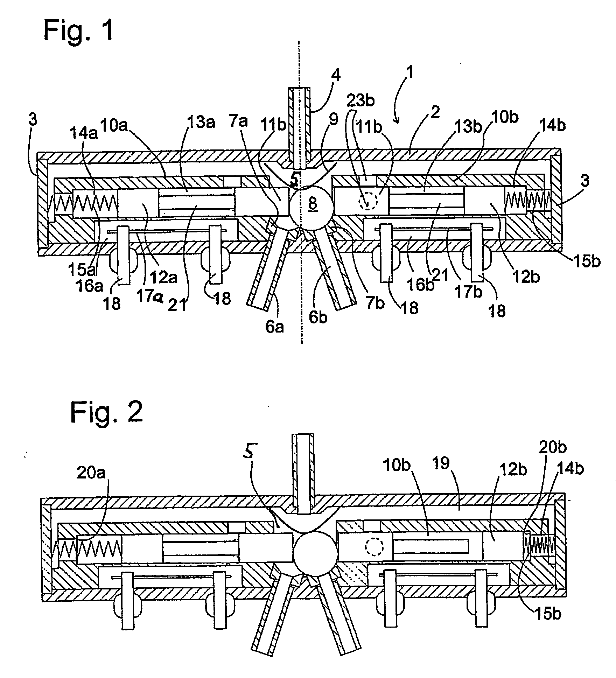

Der Längsschnitt der Fig. 1 zeigt ein Mehrwegeventil gemäß einer ersten Ausgestaltung der Erfindung in einem stabilen Ruhezustand. Das Ventil hat ein Gehäuse 1 in Form eines Rohrstückes 2, das an seinen beiden Enden durch eingefügte, z.B. verlötete Plättchen 3 dicht verschlossen ist.

Das Rohrstück 2 weist drei Bohrungen auf, die jeweils in eine zentrale Kammer des Gehäuses 1, als Sitzkammer 5 bezeichnet, münden. In eine erste Bohrung auf einer als strichpunktierte Linie dargestellten Symmetrieebene des Gehäuses 1 ist eine Eingangsleitung 4 für ein Fluid eingefügt, und in zwei Bohrungen auf einer diametral gegenüberliegenden Seite des Gehäuses 1 ist jeweils eine Ausgangsleitung 6a bzw. 6b mit hohlkegelförmigem Ventilsitz 7a bzw. 7b eingefügt. Die Ausgangsleitungen 6a, 6b laufen zum Gehäuse 1 hin aufeinander zu, so dass die Ventilsitze 7a, 7b im Innern des Gehäuses 1 praktisch aneinander grenzen. Ein Schließorgan in Form einer Kugel 8 auf dem rechten Sitz 7b versperrt die rechte Ausgangsleitung 6b. Den zwei Ventilsitzen 7a, 7b liegt auf der Seite der Eingangsleitung 4 eine Blattfeder 9 gegenüber, die in Bezug auf die Mittelebene symmetrisch ist und im in Fig. 1 gezeigten Zustand die Kugel 8 gegen den Ventilsitz 7b drückt und so die rechte Ausgangsleitung 6b geschlossen hält.

Rechts und links von der Sitzkammer 5 sind im Gehäuse 1 zwei Zylinder 10a, 10b untergebracht. In einer Bohrung jedes der Zylinder 10a, 10b begrenzen ein Stempel 11a bzw. 11b und eine verschiebbare Rückwand 12a bzw. 12b eine Zylinderkammer 13a, 13b. Jeweils außerhalb der verschiebbaren Rückwände 12a, 12b ist in den Zylinderkörpern jeweils eine Federkammer 14a, 14b gebildet, in denen eine Schraubenfeder 15a bzw. 15b untergebracht ist, die jeweils die verschiebbare Wand 12a bzw. 12b von dem Plättchen 3 des Gehäuses fort und zur Mitte des Ventils hin drückt. Die Stempel 11a, 11b tragen jeweils an ihrer nach außen, zur Zylinderkammer 13a bzw. 13b hin gerichteten Seite einen Stab 21, der im in Fig. 1 gezeigten Zustand die verschiebbare Rückwand 12a bzw. 12b berührt. So wird die von den Schraubenfedern 15a, 15b ausgeübte Federkraft über die verschiebbaren Rückwände 12a, 12b und die Stempel 11a, 11b auf die Kugel 8 übertragen. Die Kräfte der Federn 15 sind entgegengesetzt orientiert und kompensieren sich weitgehend. Keine der Federn 15 ist in der Lage, die von der Blattfeder 9 auf die Kugel 8 ausgeübte Kraft zu überwinden, die die Kugel gegen ihren Sitz gedrückt hält, und die Kugel 8 von ihrem Sitz b zu verdrängen.

Neben der Zylinderkammer 13a, 13b und mit dieser kommunizierend ist auf beiden Seiten des Gehäuses 1 eine Heizkammer 16a, 16b vorgesehen, in der sich als Heizelement ein ohmscher Widerstand 17a, 17b befindet. Stromdurchführungen 18 für die selektive Stromversorgung des Widerstandes 17a oder 17b sind durch das Rohrstück 2 geführt. In der Fig. sind zwei Stromdurchführungen 18 für jeden Heizwiderstand 17a bzw. 17b gezeigt. Es ist auch möglich, jeweils nur eine gegen das Gehäuse 1 isolierte Durchführung 18 pro Heizwiderstand vorzusehen, die mit einem Ende von dessen Heizdraht verbunden ist; das andere Ende beider Heizdrähte kann über das metallische Rohrstück 2 auf Masse gelegt sein.

In dem in Fig. 1 gezeigten Zustand ist die rechte Zylinderkammer 13b, die mit dem gleichen Fluid gefüllt ist, das durch das Ventil strömt, gegen die Sitzkammer 5 und deren Ein- und Ausgänge abgedichtet; der Kolben 11b versperrt Druckausgleichsöffnungen 23b. Wenn in diesem Zustand der Widerstand 17b von einer (nicht gezeigten) Stromversorgung mit Energie versorgt wird, erwärmt sich das Fluid in der Heizkammer 16b und der damit verbundenen Zylinderkammer 13b und beginnt, sich auszudehnen. Dies führt zunächst dazu, dass wie in Fig. 2 gezeigt, die verschiebbare Rückwand 12b des Zylinders 10b unter gleichzeitiger Komprimierung der Schraubenfeder 15b nach außen zurückweicht. Der Hub dieser Zurückweichbewegung kann wesentlich kleiner als in Fig. 2 dargestellt und praktisch Null sein.

Das dabei aus der Federkammer 14b verdrängte Fluid erreicht über einen Kanal 19 die Sitzkammer 5 und vermischt sich so mit dem durch das Ventil fließenden Fluidstrom.

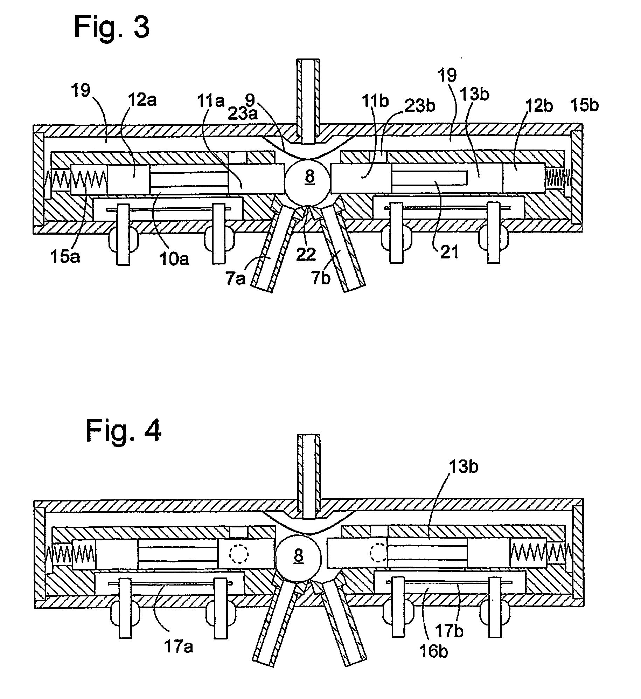

Einer von der Wand der Federkammer 14b innen vorstehende Schulter 20b bildet einen Anschlag, der die Auswärtsbewegung der Rückwand 12b alsbald beendet. Bei weiterer Erwärmung und Verdampfung des Fluids in der Zylinderkammer 13b wird schließlich ein Zustand erreicht, wo der Innendruck in der Zylinderkammer 13b groß genug ist, damit der Stempel 11b entgegen der Kraft der Blattfeder 9 die Kugel 8 vom Sitz 7b verdrängt. Die Kugel 8 beginnt somit, sich nach links zu bewegen, wie in Fig. 3 gezeigt. Dabei verschiebt sie auch den Stempel 11a und über diesen die verschiebbare Rückwand 12a des linken Zylinders 10a und drückt dabei dessen Schraubenfeder 15a zusammen. Auf diese Weise wird schließlich die in Fig. 3 gezeigte labile Gleichgewichtslage erreicht, in der die Kugel 8 von der Blattfeder 9 mittig gegen einen Grat 22 zwischen den zwei Ventilsitzen 7a, 7b gedrückt wird. Sobald durch weitere Ausdehnung des erhitzten Fluids in der Zylinderkammer 13b dieser Grat 22 überwunden ist, unterstützt die Blattfeder 9 die weitere Verschiebung der Kugel 8 nach links und nach unten in der Fig., auf den Ventilsitz 7a. Während dies geschieht, passiert die Rückseite des Stempels 12b die Druckausgleichsöffnung 23b, die die Zylinderkammer 13b mit dem Kanal 19 in Verbindung setzt. Das erwärmte Fluid entweicht aus der Zylinderkammer 13b, und die von ihm angetriebene Einwärtsbewegung des Stempels 11b kommt zum Stehen. Gleichzeitig kann sich nun die komprimierte Schraubenfeder 15b wieder strecken und die verschiebbare Rückwand 12b nach innen schieben, bis sie gegen die Spitze des Stabes 21 stößt.

So stellt sich die in Fig. 4 gezeigte Konfiguration ein, die ein Spiegelbild der Konfiguration von Fig. 1 ist. Die Stromversorgung des Widerstandes 17b wird nun unterbrochen, so dass die Heizkammer 16b und die Zylinderkammer 13b auskühlen können und die Fluiddichte dort wieder den gleichen Wert wie in den anderen Kammern 5, 13a, 16a des Ventils annimmt.

Wenn zu einem späteren Zeitpunkt der Widerstand 17a mit Heizenergie versorgt wird, läuft der Prozeß spiegelbildlich zum oben beschriebenen ab, und die Kugel 8 kehrt in die Stellung der Fig. 1 zurück. Der Umschaltvorgang funktioniert unabhängig davon, ob das Gehäuse tatsächlich von Fluid durchströmt wird oder ob dieses darin steht. Lediglich die zum Umschalten der Kugel 8 benötigte Kraft kann im Falle eines durchströmten Ventils größer als im Falle ohne Strömung sein, da der Druck der Fluidströme die Kugel 8 gegen ihren jeweiligen Sitz andrückt.

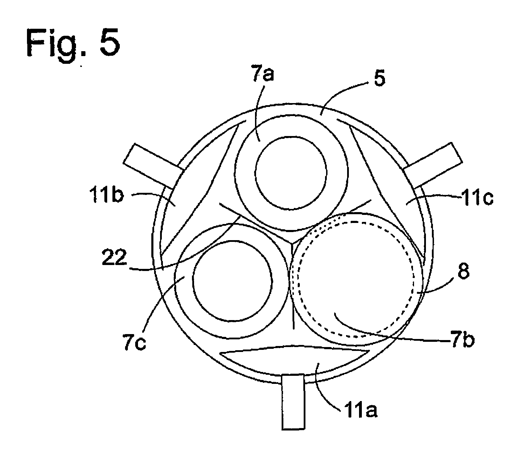

Die Erfindung ist auch auf Mehrwegeventile mit mehr als zwei Ausgängen anwendbar. Fig. 5 zeigt einen schematisierten Schnitt durch eine Sitzkammer 5, bei dem die Seitenwand der Sitzkammer, in der die Ventilsitze, hier drei Sitze 7a, 7b, 7c, angeordnet sind, in Draufsicht gezeigt sind. Einer der Ventilsitze, als gestrichelter Kreis 7b dargestellt, ist durch die Kugel 8 verschlossen. Drei Stempel 11a, 11b, 11c, deren Zylinderkammern in der gleichen Weise wie in den Figs. 1 bis 4 gezeigt aufgebaut und in der Fig, nicht dargestellt sind, sind symmetrisch jeweils in einem Winkelabstand von 120° angeordnet. Jeder Stempel 11a, 11b, 11c liegt symmetrisch zwei Ventilsitzen 7b, 7c; 7c, 7a bzw. 7a, 7b gegenüber. Die Breite jedes Stempels, z.B. 11a, ist groß genug, so dass dieser die Kugel 8, wenn sie auf einem der zwei vor dem Stempel liegenden Sitze 7b, 7c liegt, tangential berühren und vor sich herschieben kann, und andererseits klein genug, um den Stempel so weit ins Innere der Sitzkammer 5 vorschieben zu können, dass er den Grat 22 zwischen benachbarten Ventilsitzen überwindet und, durch die (hier nicht dargestellte) Blattfeder unterstützt, den dem Stempel 11 a gegenüberliegenden Ventilsitz 7a erreicht, ohne dass der Stempel 11a die beiden anderen Stempel 11b, 11c berührt.

Ein Mehrwegeventil wie oben beschrieben ist insbesondere im Kältemittelkreislauf eines Kältegeräts einsetzbar. Dabei kann das Kältemittel, das in dem Kreislauf zirkuliert, z.B. Isobutan, als Arbeitssubstanz in den Zylinderkammern 13a, 13b genutzt werden. Die Leistungsfähigkeit der Heizwiderstände 17a und 17b sowie einer ihnen zugeordneten Heizstrom-Versorgungsschaltung (nicht dargestellt) sind in Abhängigkeit von der sonstigen Dimensionierung des Kältemittelkreislaufs ausreichend bemessen, um das Kältemittel in den Zylinderkammern 13a, 13b verdampfen zu können.

## Patentansprüche

1. Mehrwegeventil mit einem Gehäuse (1), das mehrere Ein- und Ausgänge (4, 6a, 6b) und eine Kammer (5) mit mehreren jeweils einem Ein- oder Ausgang zugeordneten Ventilsitzen (7a, 7b, 7c) aufweist, einem zwischen den Ventilsitzen (7a, 7b, 7c) bewegbaren Schließorgan (8), und wenigstens einem Zylinder (10a, 10b) mit einer ein Fluid enthaltenden Zylinderkammer (13a, 13b), der eine Heizeinrichtung (17a, 17b) zugeordnet ist und die einen unter dem Druck des erwärmten Fluids in dem Zylinder (10a, 10b) bewegbaren Stempel (11a, 11b, 11c) aufweist, der durch seine Bewegung in der Lage ist, das Schließorgan (8) von einem der Ventilsitze (7a, 7b, 7c) zu einem anderen Ventilsitz (7a, 7b, 7c) zu verdrängen, **dadurch gekennzeichnet, dass** die Zylinderkammer (13a, 13b) im Laufe der Bewegung des Stempels (11a, 11b, 11c) zeitweilig mit einem der Ein- und Ausgänge (4, 6a, 6b) kommuniziert.

2. Mehrwegeventil nach Anspruch 1, **dadurch gekennzeichnet, dass** jeder Ventilsitz (7a, 7b) jeweils einem Ausgang (6a, 6b) des Gehäuses (1) zugeordnet ist.

3. Mehrwegeventil nach Anspruch 1 oder 2, **gekennzeichnet durch** ein federelastisches Element (9) zum Ausüben einer Gegenkraft auf das Schließorgan (8), die der Verdrängung des Schließorgans (8) von jedem Ventilsitz (7a, 7b, 7c) entgegenwirkt.

4. Mehrwegeventil nach Anspruch 3, **dadurch gekennzeichnet, dass** das Schließorgan (8) in einer Sitzkammer (5) des Gehäuses bewegbar ist, dass die Sitze (7a, 7b, 7c) an einer ersten Seitenwand der Sitzkammer angeordnet sind und das federelastische Element (9) das Schließorgan (8) in Richtung der ersten Seitenwand beaufschlagt.

5. Mehrwegeventil nach Anspruch 3 oder 4, **dadurch gekennzeichnet, dass** das federelastische Element eine Blattfeder (9) ist.

6. Mehrwegeventil nach einem der vorhergehenden Ansprüche, **dadurch gekennzeichnet, dass** das Schließorgan (8) in einer Sitzkammer (5) des Gehäuses (1) bewegbar ist, dass der Zylinder (10a, 10b) eine Druckausgleichsöffnung (23a, 23b) aufweist, die in ausgefahrenem Zustand des Stempels (11a, 11b) einen Druckausgleich zwischen der Sitzkammer (5) und einer Zylinderkammer (13a, 13b) des Zylinders (10a, 10b) erlaubt.

7. Mehrwegeventil nach einem der vorhergehenden Ansprüche, **dadurch gekennzeichnet, dass** der Zylinder (10a, 10b) eine federbeaufschlagt verschiebbare Rückwand (12a, 12b) aufweist.

8. Mehrwegeventil nach Anspruch 7, **dadurch gekennzeichnet, dass** eine Feder (15a, 15b) zum Beaufschlagen der beweglichen Rückwand (12a, 12b) in einer von der beweglichen Rückwand (12a, 12b) begrenzten, mit der Sitzkammer (5) kommunizierenden Federkammer (14a, 14b) untergebracht ist.

9. Mehrwegeventil nach einem der vorhergehenden Ansprüche, **dadurch gekennzeichnet, dass** es zwei Sitze (7a, 7b) und zwei einander diametral gegenüberliegende Zylinder (10a, 10b) aufweist.

10. Mehrwegeventil nach einem der vorhergehenden Ansprüche, **dadurch gekennzeichnet, dass** die Heizeinrichtung (17a, 17b) in einer mit einer Zylinderkammer (13a, 13b) des Zylinders (10a, 10b) kommunizierenden Heizkammer (16a, 16b) angeordnet ist.

11. Fluidkreislauf mit einem Mehrwegeventil nach einem der vorhergehenden Ansprüche, **dadurch gekennzeichnet, dass** das Fluid in wenigstens teilweise flüssigem Zustand in das Mehrwegeventil eintritt und dass eine Versorgungsschaltung zum Versorgen der elektrischen Heizeinrichtung mit Heizenergie angelegt ist, um Fluid in einer Zylinderkammer (13a, 13b) des Zylinders (10a, 10b) zu verdampfen.

12. Fluidkreislauf nach Anspruch 11, **dadurch gekennzeichnet, dass** das Fluid ein Kältemittel, insbesondere Isobutan ist.

13. Kältegerät, **dadurch gekennzeichnet, dass** in einem Kältemittelkreislauf des Kältegeräts ein Mehrwegeventil nach einem der Ansprüche 1 bis 10 angeordnet ist.

## Claims

1. Multi-way valve with a housing (1), which has a plurality of inlet and outlet means (4, 6a, 6b) and a chamber (5) with a plurality of valve seats (7a, 7b, 7c) each associated with a respective inlet or outlet, a closing element (8) movable between the valve seats (7a, 7b, 7c) and at least one cylinder (10a, 10b) with a cylinder chamber (13a, 13b), which contains a fluid and is associated with a heating device (17a, 17b) and which has a ram (11a, 11b, 11c) movable under the pressure of the heated fluid in the cylinder (10a, 10b), the ram being in a position by its movement to displace the closing element (8) from one of the valve seats (7a, 7b, 7c) to another valve seat (7a, 7b, 7c), **characterised in that** the cylinder chamber (13a, 13b) in the course of the movement of the ram (11a, 11b, 11c) temporarily communicates with one of the inlet and outlet means (4, 6a, 6b).

2. Multi-way valve according to claim 1, **characterised in that** each valve seat (7a, 7b) is associated with a respective outlet (6a, 6b) of the housing (1).

3. Multi-way valve according to claim 1 or 2, **characterised by** a resilient element (9) for exerting a counter-force on the closing element (8), which counteracts the displacement of the closing element (8) from each valve seat (7a, 7b, 7c).

4. Multi-way valve according to claim 3, **characterised in that** the closing element (8) is movable in a seat chamber (5) of the housing, that the seats (7a, 7b, 7c) are arranged at a first side wall of the seat chamber and the resilient element (9) loads the closing element (8) in the direction of the first side wall.

5. Multi-way valve according to claim 3 or 4, **characterised in that** the resilient element is a leaf spring (9).

6. Multi-way valve according to one of the preceding claims, **characterised in that** the closing element (8) is movable in a seat chamber (5) of the housing (1) and that the cylinder (10a, 10b) has a pressure equalisation opening (23a, 23b) which in the moved-out state of the ram (11a, 11b) allows pressure equalisation between the seat chamber (5) and a cylinder chamber (13a, 13b) of the cylinder (10a, 10b).

7. Multi-way valve according to one of the preceding claims, **characterised in that** the cylinder (10a, 10b) has a spring-loaded, displaceable rear wall (12a, 12b).

8. Multi-way valve according to claim 7, **characterised in that** a spring (15a, 15b) for loading the movable rear wall (12a, 12b) is accommodated in a spring chamber (14a, 14b) bounded by the movable rear wall (12a, 12b) and communicating with the seat chamber (5).

9. Multi-way valve according to one of the preceding claims, **characterised in that** it has two seats (7a, 7b) and two diametrically opposite cylinders (10a, 10b).

10. Multi-way valve according to one of the preceding claims, **characterised in that** the heating device (17a, 17b) is arranged in a heating chamber (16a, 16b) communicating with a cylinder chamber (13a, 13b) of the cylinder (10a, 10b).

11. Fluid circuit with a multi-way valve according to one of the preceding claims, **characterised in that** the fluid enters in at least partly liquid state into the multi-way valve and that a supply circuit for supply of the electric heating device with heating energy is designed for evaporating fluid in a cylinder chamber (13a, 13b) of the cylinder (10a, 10b).

12. Fluid circuit according to claim 11, **characterised in that** the fluid is a refrigerant, particularly isobutane.

13. Refrigerating appliance, **characterised in that** a multi-way valve according to one of claims 1 to 10 is arranged in a refrigerant circuit of the refrigerating appliance.

## Revendications

1. Vanne à plusieurs voies qui présente un boîtier (1) doté de plusieurs entrées et sorties (4, 6a, 6b) et d'une chambre (5) qui présente plusieurs sièges de vanne (7a, 7b, 7c) associés respectivement à une entrée ou à une sortie, d'un organe de fermeture (8) qui peut se mouvoir entre les sièges de vanne (7a, 7b, 7c) et d'au moins un cylindre (10a, 10b) doté d'une chambre cylindrique (13a, 13b) qui contient un fluide, à laquelle un dispositif de chauffage (17a, 17b) est associé et qui présente un poussoir (11a, 11b, 11c) qui peut se mouvoir dans le cylindre (10a, 10b) sous la poussée du fluide chauffé et dont le mouvement permet de déplacer l'organe de fermeture (8) de l'un des sièges de vanne (7a, 7b, 7c) vers un autre siège de vanne (7a, 7b, 7c), **caractérisée en ce que** la chambre cylindrique (13a, 13b) communique temporairement avec l'une des entrées ou sorties (4, 6a, 6b) au cours du mouvement du poussoir (11a, 11b, 11c).

2. Vanne à plusieurs voies selon la revendication 1, **caractérisée en ce que** chaque siège de vanne (7a, 7b) est respectivement associé à une sortie (6a, 6b) du boîtier (1).

3. Vanne à plusieurs voies selon les revendications 1 ou 2, **caractérisée par** un élément élastique (9) qui exerce sur l'organe de fermeture (8) une contre-force qui s'oppose au déplacement de l'organe de fermeture (8) de chaque siège de vanne (7a, 7b, 7c).

4. Vanne à plusieurs voies selon la revendication 3, **caractérisée en ce que** l'organe de fermeture (8) peut se mouvoir dans une chambre de sièges (5) du boîtier, **en ce que** les sièges (7a, 7b, 7c) sont disposés sur une première paroi latérale de la chambre de sièges et que l'élément élastique (9) sollicite l'organe de fermeture (8) en direction de la première paroi latérale.

5. Vanne à plusieurs voies selon les revendications 3 ou 4, **caractérisée en ce que** l'élément élastique est un ressort à lame (9).

6. Vanne à plusieurs voies selon l'une des revendications précédentes, **caractérisée en ce que** l'organe de fermeture (8) peut se mouvoir dans une chambre de sièges (5) du boîtier (1), **en ce que** le cylindre (10a, 10b) présente une ouverture (23a, 23b) d'équilibrage de pression qui, lorsque le poussoir (11a, 11b) est à l'état sorti, permet d'équilibrer la pression entre la chambre de sièges (5) et une chambre cylindrique (13a, 13b) du cylindre (10a, 10b).

7. Vanne à plusieurs voies selon l'une des revendications précédentes, **caractérisée en ce que** le cylindre (10a, 10b) présente une paroi arrière pouvant coulisser (12a, 12b) sollicitée élastiquement.

8. Vanne à plusieurs voies selon la revendication 7, **caractérisée en ce qu'**un ressort (15a, 15b) qui sollicite la paroi arrière mobile (12a, 12b) est installé dans une chambre de ressort (14a, 14b) délimitée par la paroi arrière mobile (12a, 12b) et communiquant avec la chambre de sièges (5).

9. Vanne à plusieurs voies selon l'une des revendications précédentes, **caractérisée en ce qu'**elle présente deux sièges (7a, 7b) et deux cylindres (10a, 10b) diamétralement opposés l'un à l'autre.

10. Vanne à plusieurs voies selon l'une des revendications précédentes, **caractérisée en ce que** le dispositif de chauffage (17a, 17b) est disposé dans une chambre de chauffage (16a, 16b) qui communique avec une chambre cylindrique (13a, 13b) du cylindre (10a, 10b).

11. Circuit de fluide doté d'une vanne à plusieurs voies selon l'une des revendications précédentes, **caractérisé en ce que** le fluide entre dans la vanne à plusieurs voies dans un état au moins partiellement liquide et **en ce qu'**un circuit d'alimentation qui alimente le dispositif de chauffage électrique en énergie de chauffage est utilisé pour vaporiser le fluide dans une chambre cylindrique (13a, 13b) du cylindre (10a, 10b).

12. Circuit de fluide selon la revendication 11, **caractérisé en ce que** le fluide est un fluide frigorifique et en particulier l'isobutane.

13. Appareil frigorifique **caractérisé en ce qu'**une vanne à plusieurs voies selon l'une des revendications 1 à 10 est disposée dans un circuit de fluide frigorifique de l'appareil frigorifique.
